# EUROPEAN PATENT APPLICATION

(11) **EP 4 147 861 A1**
(43) Date of publication of application: **15.03.2023**
(21) Application number: 22195378.9
(22) Date of filing: 13.09.2022
(51) Int. Cl.: B29C 70/52, B29D 99/00, F03D 1/06, B29L 31/08

(54) **A METHOD FOR PULTRUDING A PROFILE FOR A SPAR CAP FOR A WIND TURBINE BLADE**

(30) Priority: 13.09.2021 EP 21196295
(71) Applicant: Fiberline Composites A/S, 5500 Middelfart (DK)
(72) Inventor: Borg, Ulrik, 5500 Middelfart (DK)
(74) Representative: Budde Schou A/S

(57) **Abstract**

The method includes providing a roving supply of a first set of fibers and a second set of fibers for example carbon and glass fibers respectively. A guide plate is designed such that when pultruding the profile the first set of fibers reinforce the profile in a first area of the profile while the second set of fibers reinforce the profile in the area complement to the first area. A plurality of profiles may be assembled and form the spar cab.

## Description

The present invention relates to a profile for a spar cap for a wind turbine blade and a method for pultruding a profile for a spar cap for a wind turbine blade.

A wind turbine blade is to be light and stiff. This may be achieved with webs and spar caps constituting the load-carrying structure of the wind turbine blade. However, cost and lightning strikes contributes to the design criteria for both the blade and the load-carrying structure. Reinforcing a spar cap with carbon fiber provides good mechanical properties but adds to the cost.

It is an object of the present invention to provide a profile for a spar cap for a wind turbine blade while keeping cost and lightning strike impact probability down.

The above object and advantages together with numerous other objects and advantages, which will be evident from the description of the present invention, are according to a first aspect of the present invention obtained by:
A method for pultruding a profile for a spar cap for a wind turbine blade, said profile intended to extend in the longitudinal direction of a wind turbine blade, and having a:
cross section including a top and a bottom, and a first side, and a second side opposite said first side,
a first area extending between said first side and said second side,
said method comprising:
   - providing a roving supply of a first set of fibers and a second set of fibers,
   - providing a guide plate, said guide plate having a plurality of holes including
      a first set of holes arranged such that fibers from said first set of fibers being pulled through said first set of holes such that fibers from said first set of fibers arranged in said first area,
      a second set of holes arranged such that fibers from said second set of fibers being pulled through said second set of holes such that fibers from said second set of fibers arranged in the area complement to said first area,
   - providing a die and a heat source for shaping and curing said spar cap,
   - providing a puller, and pulling said first set of fibers and said second set of fibers from said roving supply through said guide plate and said die and heat source.

According to a second aspect of the present invention the above objects and advantages are obtained by:
A profile for a spar cap for a wind turbine blade,
said profile intended to extend in the longitudinal direction of a wind turbine blade, and having a:
   cross section including a top and a bottom, and a first side, and a second side opposite said first side,
   a first area extending between said first side and said second side,
   said first area including fibers from a first set of fibers,
   the area complement to said first area including fibers from a second set of fibers.

The invention will now be explained in more detail below by means of examples with reference to the accompanying drawings. The invention may, however, be embodied in different forms than depicted below, and should not be construed as limited to any examples set forth herein. Rather, any examples are provided so that the disclosure will be thorough and complete, and will fully convey the scope of the invention to those skilled in the art. Like reference numerals refer to like elements throughout. Like elements will, thus, not be described in detail with respect to the description of each figure.
Figs. 1a to 1g illustrate seven cross sections of seven different profiles for a spar cab for a wind turbine blade. Specifically, the illustrations constitute design specifications of profiles.
Fig. 2 also show a cross section of a profile.
Figs. 3a and 3b illustrate guide plates for manufacturing profiles in a pultrusion process. A design specification illustrated in any of figs. 1a to 1g may form the basis for the specification of a guide plate.
Fig. 4 shows a cross section of a pultruded profile.

In general, the **profile 10** is made of a composite material such as a fiber reinforced polymer. The reinforcement may be with two different fibers in two different areas of the profile. There may also be an area which is reinforced with a mix of two different fibers, such a carbon fibers and glass fibers.

The cross section is illustrated as being elongated, i.e. the height (distance between top and bottom of the profile) is smaller than the width (the distance between the first side and the second side of the profile).

Hatched area illustrates an area of the cross section wherein the reinforcement is with fibers from a first set of fibers, i.e. hatched area is first type of reinforced area.

The area that is not hatched (complement area 13) is reinforced with fibers from a second set of fibers, i.e. the area complement to the hatched area (the remaining area of the profile). Thus, the complement area is a second type of reinforced area.

The first and second fibers are different, i.e. having different mechanical or electrical properties.

The first fibers may a fiber resulting in a stiffness that is greater than what the second fibers results in. The first fibers may also lead to a higher electric conductivity in the area of the profile reinforced with the first fibers compared to the area of the profile that is reinforced with the second fibers. The first fibers may be carbon fibers and the second fibers may be glass fibers.

The hatched area may take up between 10 % and 80 % of the total area of the cross section of the profile, such as 20 % to 70 %, or 30 % to 60 %.

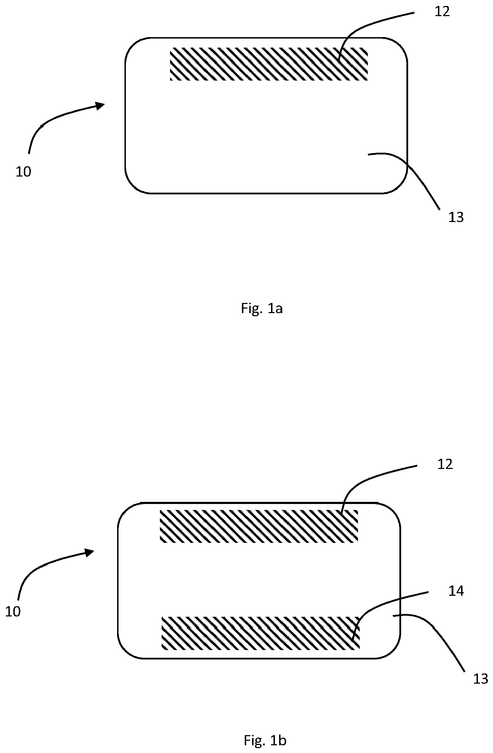

**In** **fig. 1a** the hatched area (constituted by a **first area 12)** extends between the first side and the second side of the profile (the second side being opposite the first side) and has an elongated shape, i.e. having a width greater than the height.

The first area is reinforced with fibers from a first set of fibers such as carbon fibers. The remaining (complement) area is reinforced with fibers from a second set of fibers such as glass fibers.

The first area extends horizontal. In the present setting the term horizontal refers to the x-direction when considering the cross section in a xy-cartesian coordinate system in the plane of the paper.

The height of the first area may be between 5 % to 40 % of the height of the profile, such as 5 % to 30 %, or 10 % to 30 % or 10 % to 20 %.

The width of the first area may be between 50 % to 100 % of the width of the profile, such as 50 % to 90 %, or 60 % to 90 % or 60 % to 80 %.

Such a first area is shown in each of the five profiles of figs. 1a to 1e.

The first area may be arranged at the top or bottom of the profile.

The first area may have a distance out to the edge of the profile such as either the top of the profile when the first area is at the top of the profile or such as the bottom of the profile when the first area is at the bottom of the profile - i.e. the first area may begin at a distance greater than 0 mm from the edge.

The distance may be greater than 0,5 % and smaller than 10 % of the height of said profile, such as in the range 0,5 % to 5 % or 1 % to 4 % or 1 % to 3 %.

The first area has a first end at the first side of the profile and a second end at the second side of the profile. Either or both of the ends may have a distance to the side edge of the profile. The distance may be greater than 0,5 % and smaller than 10 % of the height of said profile, such as in the range 0,5 % to 5 % or 1 % to 4 % or 1 % to 3 %.

A number of profiles like the one illustrated in fig. 1a may be put together to form a spar cap. The first area provides added stiffness and the shape of the first area provides for a current path through the profile such that the profile is less likely to break down in case of the profile experiencing a high electrical current during a lighting strike in the blade.

**Fig. 1b** illustrates the addition of a **second area 14** arranged opposite the first area, i.e. the first arranged is arranged at the top of the profile and the second area is arranged at the bottom of the profile.

The first area and second area are reinforced with fibers from a first set of fibers such as carbon fibers. The remaining (complement) area is reinforced with fibers from a second set of fibers such as glass fibers.

The second area extends substantially parallel to the first area, i.e. there may be an angle between them, but such angle not being greater than 15 degrees.

The second area may have the same shape/form as described above for the first area.

The hatched area (the first area and the second area) may take up between 10 % and 80 % of the total area of the cross section of the profile, such as 20 % to 70 %, or 30 % to 60 %.

The second area may have a distance out to the bottom edge of the profile, i.e. the second area may begin at a distance greater than 0 mm from the edge.

The distance may be greater than 0,5 % and smaller than 10 % of the height of said profile, such as in the range 0,5 % to 5 % or 1 % to 4 % or 1 % to 3 %.

The second area has a first end at the first side of the profile and a second end at the second side of the profile. Either or both of the ends may have a distance to the side edge of the profile. The distance may be greater than 0,5 % and smaller than 10 % of the height of said profile, such as in the range 0,5 % to 5 % or 1 % to 4 % or 1 % to 3 %.

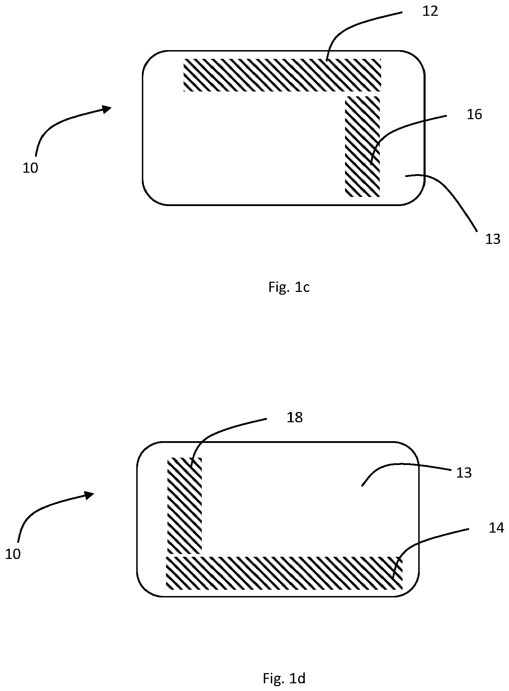

**Fig. 1c** illustrates the addition of a first perpendicular area 16, i.e. an area extending between the top and bottom of the profile - it has a longitudinal extent that is substantially perpendicular to the first area (hence it is termed a perpendicular area and extends substantially vertically).

The first area and the first perpendicular area are reinforced with fibers from a first set of fibers such as carbon fibers. The remaining (complement) area is reinforced with fibers from a second set of fibers such as glass fibers.

The first area and the first perpendicular area may form a L-shape.

Fig. 1c illustrates that the first area and the first perpendicular area have a distance to each other. However, the two areas may be arranged so that they touch each other.

The first perpendicular area may have a distance out to the side of the profile, i.e. the first perpendicular area may begin at a distance greater than 0 mm from the side.

The distance may be greater than 0,5 % and smaller than 10 % of the height of said profile, such as in the range 0,5 % to 5 % or 1 % to 4 % or 1 % to 3 %.

The first perpendicular area has a first end and a second end.

The first end is at the top of the profile (or closer to the top than the second end).

The second end is at the bottom of the profile (or closer to the bottom than the first end).

The first end may have a distance to the top, and the second end may have a distance to the bottom. The distance may be greater than 0,5 % and smaller than 10 % of the height of said profile, such as in the range 0,5 % to 5 % or 1 % to 4 % or 1 % to 3 %.

**Fig. 1d** illustrates a profile with the second area 14 and a **second perpendicular area 18**. It corresponds to rotating the profile of fig. 1c 180 degrees.

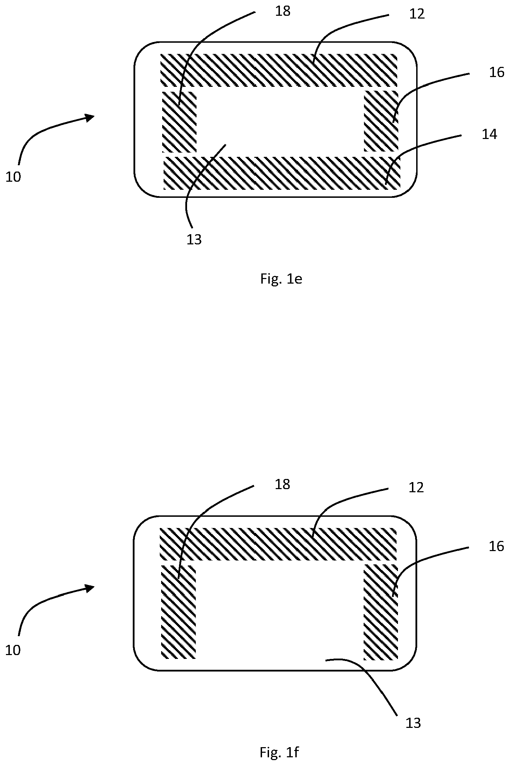

**Fig. 1e** shows a profile having a first area 12 (at the top), a second area 14 at the bottom, a first perpendicular area 16 (at the first side), and a second perpendicular area 18 (at the second side).

The first area, the second area, the first perpendicular area and the second perpendicular area are reinforced with fibers from a first set of fibers such as carbon fibers. The remaining (complement) area is reinforced with fibers from a second set of fibers such as glass fibers.

The four areas are shown as not touching each other, but they may be arranged such that there is contact from one area to a neighboring area, i.e. the first area and the first perpendicular profile are neighbors as well as the first area and the second perpendicular area.

**Fig. 1f** shows a profile where the hatched area is constituted by the first area, the first perpendicular area, and the second perpendicular area, i.e. the hatched area is U-shaped.

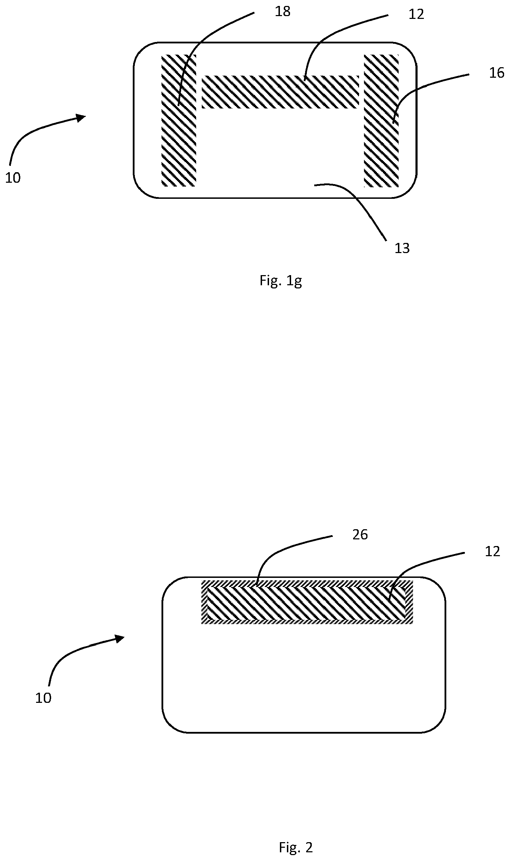

**Fig. 1g** shows a profile with a hatched area similar to the hatched area in fig. 1f, but where the hatched area is H-shaped, i.e. the first area 12 extends between the first perpendicular area 16 and the second perpendicular area 18, and it is further from the top of the profile than it is in fig. 1f.

In general, the first perpendicular area may extend closer to the top of the profile than the first area - or the first area may extend closer to the bottom of the profile than the second area (in case the hatched reinforced area is at the bottom and a one of the sides of the profile).

**Fig. 2** illustrates a profile with a transition area 26.

The transition area is an area of the cross section of the profile that is reinforced with fibers from both the first set of fibers and the second set of fibers, i.e. a mix of first and second fibers.

Such a transition is aimed at reducing stress when reinforcing different areas with different fibers.

The transition area may be present in any of the profiles illustrated in figs. 1a to 1g and may be between an area reinforced with fibers exclusively from the first set of fibers and an area reinforced with fibers exclusively from the second set of fibers.

The transition area may also be between an edge of the profile and a part of the hatched area, for example between the side and the first perpendicular area or between the first area and the top edge of the profile. The transition area may also be between the first area and the middle of the profile.

There may also be a transition area between the first area and the middle of the profile and between the second area and the middle of the profile, i.e. two transition areas.

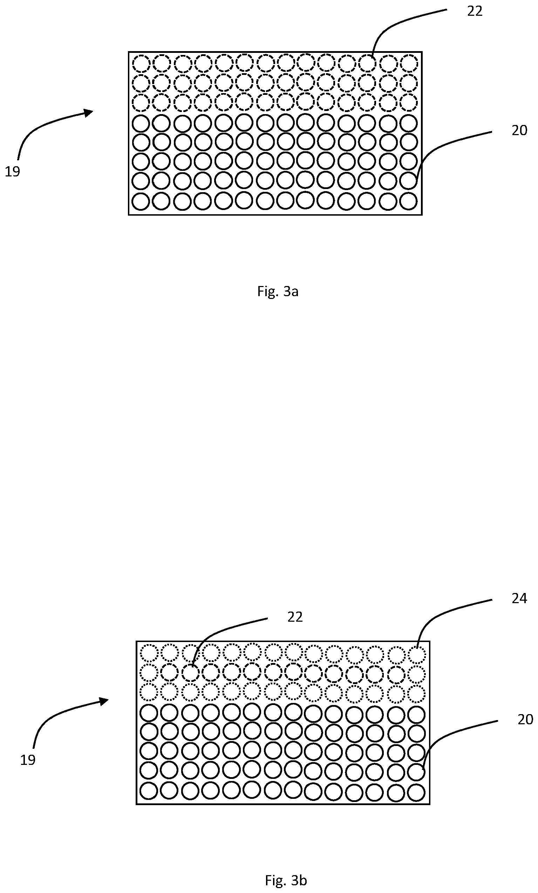

**Fig. 3a** illustrates a guide plate 19 for manufacturing a profile in a pultrusion process.

Specifically, the guide plate may be for manufacturing the profile of fig.1a in a pultrusion process.

The guide plate has 14 times 8 openings, i.e. 8 lines with 14 openings in each line.

The guide plate is arranged between the roving supply and the puller. The roving supply has rolls with a first type of fibers and a second type of fibers.

From the roving supply the fibers are pulled through the openings in the guide plate.

The openings in the guide plate illustrated in fig. 3a is shown as either having a solid contour 20 or a striped contour 22.

Fibers from the first set of fibers are pulled through openings that are arranged in an area that reflects the first area of the profile illustrated in fig. 1a, specifically, fibers from the first set of fibers are pulled through all the openings in the first three lines of openings in order to form the first area which is reinforced with fibers from the first set of fibers.

Correspondingly, fibers from the second set of fibers are pulled though the remaining openings of the guide plate during the pultrusion of the profile.

Thus, a design specification of a profile such as one of the design specifications in any of figs. 1a to 1g may be used to determine which holes the fibers from the first set of fibers are pulled through and which holes the fibers from the second set of fibers are pulled through.

**Fig. 3b** also illustrates a guide plate for a pultrusion process.

The guide plate of fig. 3b is for pultruding a profile with a transition area such as the profile/design specification illustrated in fig. 2.

The guide plate has openings shown having a dotted contour 24. In fig. 3b these openings surround the openings with striped contour. The openings are for the transition area.

In general, the openings for a transition area may be the openings next to the openings for the first type of reinforced area. And the openings for a transition area may be between the openings for the first type of reinforced area and the openings for the second type of reinforced area.

Thus, fibers from the first set of fibers and fibers from the second set of fibers are pulled through each of the openings that are illustrated with dotted contours.

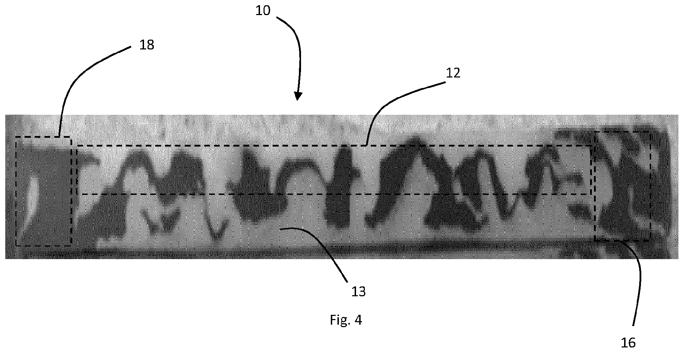

**Fig. 4** shows a cross section of a pultruded profile.

The profile corresponds to the profile illustrated in fig. 1g, i.e. where the hatched area is constituted by the first area 12, the first perpendicular area 16 and the second perpendicular area 18. Thus, the profile is manufactured with a guide plate that is specified according to the design specification illustrated in fig. 1g.

The first area 12, the first perpendicular area 16 and the second perpendicular area 18 are illustrated with the three rectangles having a striped outline.

The first type of reinforced area is the solid black area/parts of the profile.

The boundary between the area that is reinforced with fibers from a first set of fibers and the complement area where the reinforcement is with fibers from a second set of fibers is not as sharp as indicated by how the black parts appear, because there is both a pull on the fibers, heat influence in the pultrusion die and a curing that may offset fibers or cause an offset between the design specification and the pultruded profile.

The first perpendicular area and the second perpendicular area appear to be close to the design specification whereas the first area appear further from the design specification, i.e. the first area is an area filled with black squiggles.

In general, the first type of reinforced area is an area where the majority of the area is reinforced with fibers from the first set of fibers, i.e. that area is an area where more than 50 % (such as more than 60 % or 70 % or 80 %) of the area is reinforced with fibers from the first set of fibers.

Now follows a set of points, which constitute aspects of the present invention which may be considered independently patentable and as such the following sets form basis for possible future sets of claims:
1. A method for pultruding a profile for a spar cap for a wind turbine blade,
   said profile intended to extend in the longitudinal direction of a wind turbine blade, and having a:
   cross section including a top and a bottom, and a first side, and a second side opposite said first side,
   a **first area** extending between said first side and said second side,
   said method comprising:
      - providing a roving supply of a first set of fibers and a second set of fibers,
      - providing a guide plate, said guide plate having a plurality of holes including
         a first set of holes arranged such that fibers from said first set of fibers being pulled through said first set of holes such that fibers from said first set of fibers arranged in said first area,
         a second set of holes arranged such that fibers from said second set of fibers being pulled through said second set of holes such that fibers from said second set of fibers arranged in the area complement to said first area,
      - providing a die and a heat source for shaping and curing said spar cap,
      - providing a puller, and pulling said first set of fibers and said second set of fibers from said roving supply through said guide plate and said die and heat source.
2. The method according to any of the preceding points, said first area having a width and a height, said width being greater than said height.
3. The method according to any of the preceding points, said first area arranged at said top or said bottom.
4. The method according to any of the preceding points, said profile having a **first perpendicular area,** said first perpendicular area extending substantially from said top to said bottom.
5. The method according to any of the preceding points, said first perpendicular area arranged closer to said first side than said second side.
6. The method according to any of the preceding points, said first area and said first perpendicular area forming a substantially L-shaped area.
7. The method according to any of the preceding points, said first perpendicular area extending substantially perpendicular to said first area.
8. The method according to any of the preceding points, said profile having a **second perpendicular area,** said second perpendicular area extending substantially from said top to said bottom.
9. The method according to any of the preceding points, said second perpendicular area arranged at the opposite side to said first perpendicular area.
10. The method according to any of the preceding points, said first area extending between said first perpendicular area and said second perpendicular area.
11. The method according to any of the preceding points, said first area extending from said first perpendicular area to said second perpendicular area.
12. The method according to any of the preceding points, said profile having a **second area** extending between said first side and said second side.
13. The method according to any of the preceding points, said second area extending substantially parallel to said first area.
14. The method according to any of the preceding points, said cross section constituting the intersection with a plane normal to the longitudinal axis of the profile.
15. The method according to any of the preceding points, said first set of holes further arranged such that fibers from said first set of fibers being pulled through said first set of holes such that fibers from said first set of fibers arranged in said second area.
16. The method according to any of the preceding points, said first set of holes further arranged such that fibers from said first set of fibers being pulled through said first set of holes such that fibers from said first set of fibers arranged in said first perpendicular area.
17. The method according to any of the preceding points, said first set of holes further arranged such that fibers from said first set of fibers being pulled through said first set of holes such that fibers from said first set of fibers arranged in said second perpendicular area.
18. The method according to any of the preceding points, said second set of holes further arranged such that fibers from said second set of fibers being pulled through said second set of holes such that fibers from said second set of fibers arranged in the area complement to said first area, and said second area.
19. The method according to any of the preceding points, said second set of holes further arranged such that fibers from said second set of fibers being pulled through said second set of holes such that fibers from said second set of fibers arranged in the area complement to said first area, said second area, and said first perpendicular area.
20. The method according to any of the preceding points, said second set of holes arranged such that fibers from said second set of fibers being pulled through said second set of holes such that fibers from said second set of fibers arranged in the area complement to said first area, said second area, said first perpendicular area, and said second perpendicular area.
21. The method according to any of the preceding points, said second set of holes further arranged such that fibers from said second set of fibers being pulled through said second set of holes such that fibers from said second set of fibers arranged in the area complement to said first area, and said first perpendicular area.
22. The method according to any of the preceding points, said first set of fibers being electrically conductive.
23. The method according to any of the preceding points, said first area defining an electrically conductive path.
24. The method according to any of the preceding points, said second area defining an electrically conductive path.
25. The method according to any of the preceding points, said first perpendicular area defining an electrically conductive path.
26. The method according to any of the preceding points, said second perpendicular area defining an electrically conductive path.
27. The method according to any of the preceding points, said first area having dots defined by fibers from said first set of fibers.
28. The method according to any of the preceding points, said first area being spaced a distance away from said first side, such as more than 0 mm and less than 30 mm, such as more than 0 mm and less than 20 mm, such as more than 0 mm and less than 10 mm.
29. The method according to any of the preceding points, said first area being spaced a distance away from said top or bottom, such as more than 0 mm and less than 30 mm, such as more than 0 mm and less than 20 mm, such as more than 0 mm and less than 10 mm.
30. The method according to any of the preceding points, said first perpendicular area being spaced a distance away from said first side, such as more than 0 mm and less than 30 mm, such as more than 0 mm and less than 20 mm, such as more than 0 mm and less than 10 mm.
31. The method according to any of the preceding points, comprising providing a resin impregnator and impregnating said first set of fibers and said second set of fibers with resin.
32. The method according to any of the preceding points, said resin being a vinyl ester, an epoxy resin or a polyurethane resin.
33. The method according to any of the preceding points, said first set of fibers constituted by a plurality of carbon fiber rowings preferably provided on a creel.
34. The method according to any of the preceding points, said second set of fibers constituted by a plurality of glass fiber rowings, preferably provided on said creel.
35. The method according to any of the preceding points, said profile having a first mix area, and said plurality of holes including a third set of holes arranged such that fibers from said first set of fibers and fibers from said second set of fibers being pulled through said third set of holes such that fibers from said first set of fibers and fibers from said second set of fibers being arranged in said first mix area.
36. The method according to any of the preceding points, said first mix area arranged between an edge of said profile and said first area.
37. A profile for a spar cap for a wind turbine blade,
   said profile intended to extend in the longitudinal direction of a wind turbine blade, and having a:
   cross section including a top and a bottom, and a first side, and a second side opposite said first side,
   a first area extending between said first side and said second side,
   said first area including fibers from a first set of fibers,
   the area complement to said first area including fibers from a second set of fibers.
38. A spar cap for a wind turbine blade, said spar cap comprising a plurality of profiles according to point 37.
39. A wind turbine blade comprising a spar cap according to point 38.

## Claims

1. A method for pultruding a profile for a spar cap for a wind turbine blade,
said profile intended to extend in the longitudinal direction of a wind turbine blade, and having a:
cross section including a top and a bottom, and a first side, and a second side opposite said first side,
a **first area** extending between said first side and said second side,
said method comprising:
- providing a roving supply of a first set of fibers and a second set of fibers,
- providing a guide plate, said guide plate having a plurality of holes including
a first set of holes arranged such that fibers from said first set of fibers being pulled through said first set of holes such that fibers from said first set of fibers arranged in said first area,
a second set of holes arranged such that fibers from said second set of fibers being pulled through said second set of holes such that fibers from said second set of fibers arranged in the area complement to said first area,
- providing a die and a heat source for shaping and curing said spar cap,
- providing a puller, and pulling said first set of fibers and said second set of fibers from said roving supply through said guide plate and said die and heat source.

2. The method according to any of the preceding claims, said first area having a width and a height, said width being greater than said height.

3. The method according to any of the preceding claims, said first area arranged at said top or said bottom.

4. The method according to any of the preceding claims, said profile having a **first perpendicular area,** said first perpendicular area extending substantially from said top to said bottom.

5. The method according to any of the preceding claims, said first perpendicular area arranged closer to said first side than said second side.

6. The method according to any of the preceding claims, said first area and said first perpendicular area forming a substantially L-shaped area.

7. The method according to any of the preceding claims, said first perpendicular area extending substantially perpendicular to said first area.

8. The method according to any of the preceding claims, said profile having a **second perpendicular area,** said second perpendicular area extending substantially from said top to said bottom.

9. The method according to any of the preceding claims, said second perpendicular area arranged at the opposite side to said first perpendicular area.

10. The method according to any of the preceding claims, said first area extending between said first perpendicular area and said second perpendicular area.

11. The method according to any of the preceding claims, said first area extending from said first perpendicular area to said second perpendicular area.

12. The method according to any of the preceding claims, said profile having a **second area** extending between said first side and said second side.

13. The method according to any of the preceding claims, said second area extending substantially parallel to said first area.

14. The method according to any of the preceding claims, said cross section constituting the intersection with a plane normal to the longitudinal axis of the profile.

15. The method according to any of the preceding claims, said first set of holes further arranged such that fibers from said first set of fibers being pulled through said first set of holes such that fibers from said first set of fibers arranged in said second area.
